(19) Europäisches Patentamt / European Patent Office / Office européen des brevets

(11) **EP 4 297 335 B1**

(12) **EUROPÄISCHE PATENTSCHRIFT**

(45) Veröffentlichungstag und Bekanntmachung des Hinweises auf die Patenterteilung:
**15.01.2025   Patentblatt 2025/03**

(21) Anmeldenummer: **23209298.1**

(22) Anmeldetag: **02.08.2022**

(51) Internationale Patentklassifikation (IPC):
*G06F 21/60* *(2013.01)*   *H04L 9/08* *(2006.01)*

(52) Gemeinsame Patentklassifikation (CPC):
**G06F 21/602; H04L 9/0877; H04L 9/0897**

(54) **VERFAHREN ZUR IMPLEMENTIERUNG UND NUTZUNG VON KRYPTOGRAFISCHEM MATERIAL IN WENIGSTENS EINER SYSTEMKOMPONENTE EINES INFORMATIONSTECHNISCHEN SYSTEMS**

METHOD FOR THE IMPLEMENTATION AND USE OF CRYPTOGRAPHIC MATERIAL IN AT LEAST ONE SYSTEM COMPONENT OF AN INFORMATION TECHNOLOGY SYSTEM

PROCÉDÉ DE MISE EN OEUVRE ET D'UTILISATION DE MATÉRIAU CRYPTOGRAPHIQUE DANS AU MOINS UN COMPOSANT DE SYSTÈME D'UN SYSTÈME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2021   DE 102021004427**

(43) Veröffentlichungstag der Anmeldung:
**27.12.2023   Patentblatt 2023/52**

(62) Dokumentnummer(n) der früheren Anmeldung(en) nach Art. 76 EPÜ:
**22761462.5 / 4 205 005**

(73) Patentinhaber: **Mercedes-Benz Group AG**
**70372 Stuttgart (DE)**

(72) Erfinder:
• **Pavlovic, Viktor**
 **70469 Stuttgart (DE)**
• **Friesen, Viktor**
 **76139 Karlsruhe (DE)**

(74) Vertreter: **Novagraaf Group**
**Chemin de l'Echo 3**
**1213 Onex / Geneva (CH)**

(56) Entgegenhaltungen:
DE-B3- 102020 003 072    US-A1- 2021 075 607

## Beschreibung

Die Erfindung betrifft ein Verfahren zur Implementierung und Nutzung von kryptografischem Material in wenigstens einer Systemkomponente eines informationstechnischen Systems nach der im Oberbegriff von Anspruch 1 näher definierten Art.

Das Verfahren zur Implementierung und Nutzung von kryptografischem Material beschäftigt sich im Wesentlichen damit, dass in unterschiedlichen Lebenszyklusphasen von Systemkomponenten eines informationstechnischen Systems, welche mit kryptografischem Material ausgestattet sind, dem aktuellen Sicherheitsniveau der jeweiligen Systemkomponente oder eines Untermoduls der Systemkomponente entsprechendes kryptografisches Material Verwendung finden muss. Dies bezieht sich insbesondere, nicht jedoch ausschließlich, auf das Gebiet der sogenannten CarIT-Security für Fahrzeuge.

Moderne Fahrzeuge, aber auch andere Systeme, zeichnen sich durch eine zunehmende Vernetzung aus. Die Fahrzeuge sind dabei nicht nur mit allgemein zugänglichen Systemen wie dem Internet verbunden, sondern auch mit dedizierten, vom Fahrzeughersteller bzw. OEM betriebenen Systemen, beispielsweise herstellereigenen Applikationen und einem herstellereigenen Server, welcher häufig auch als Backendserver bezeichnet wird. Diese werden vom Hersteller exklusiv für die eigene Fahrzeugflotte entwickelt, vermarktet und betrieben. All dies zusammen wird auch als Fahrzeug-Ökosystem bezeichnet.

In der Praxis ist es nun so, dass durch die vielfältigen Kommunikationsbeziehungen zwischen den einzelnen Systemkomponenten innerhalb eines solchen Fahrzeug-Ökosystems eine Vielzahl neuer Schnittstellen und Anwendungen entsteht, die allesamt durch geeignete kryptografische Verfahren, wie beispielsweise Mechanismen, Protokolle usw., abgesichert werden müssen. Diese kryptografischen Verfahren, welche so prinzipiell aus dem Stand der Technik bekannt sind, benötigen dafür vielfältiges kryptografisches Material wie beispielsweise asymmetrische Schlüsselpaare, symmetrische Schlüssel, Zertifikate, Zufallszahlen, Hashwerte usw. All diese Kryptomateriale sind aufeinander abgestimmt und werden oft vor ihrer Inbetriebnahme, zum Austausch von Kryptomaterial auch während des laufenden Betriebs, in dem Fahrzeug-Ökosystem in alle teilnehmenden Systemkomponenten eingebracht und müssen von diesen genutzt werden. Die Bereitstellung des kryptografischen Materials, das sogenannte Provisioning, erfolgt beispielsweise im Rahmen des Herstellungsprozesses, sie kann aber auch während des Betriebs der Systemkomponenten erfolgen. Die Systemkomponenten umfassen dabei insbesondere in den Fahrzeugen verbaute Steuergeräte, aber auch andere Komponenten wie beispielsweise im Fahrzeug installierte Applikationen, auf einem Smartphone verfügbare Applikationen des OEM, fahrzeugexterne Geräte und dergleichen.

Um zuverlässig zu verhindern, dass in die geschützte Kommunikation eingegriffen werden kann, ist es zwingend notwendig, zwischen kryptografischem Material, welches während der Entwicklungsphase verwendet wird, und kryptografischem Material, das während der Produktivphase, also dem realen Einsatz des fertig entwickelten Produkts, zum Einsatz kommt, unterschieden wird. Das kryptografische Material für die Entwicklungsphase, wird nachfolgend auch als Test-Kryptomaterial bezeichnet. In der Entwicklungsphase darf, solange es sich um geheimes Kryptomaterial handelt, nur ausschließlich solches Test-Kryptomaterial verwendet werden. Das Produktiv-Kryptomaterial, und hier insbesondere geheimes Produktiv-Kryptomaterial, muss nämlich während des gesamten Lebenszyklus der Systemkomponente vor unberechtigtem Zugriff geschützt werden. Dieser Schutz sollte dabei im Idealfall durch das Einhalten eines speziellen abgesicherten Prozesses und die Verwendung spezieller Schutzmechanismen in den jeweiligen Entwicklungsabteilungen und Produktionsstätten gewährleistet werden. In der Entwicklungsphase ist dies jedoch meist nur unzureichend gewährleistet, da verschiedene Bausteine des informationstechnischen Systems in dieser Entwicklungsphase meist nicht oder noch nicht umgesetzt bzw. implementiert sind.

So kann beispielsweise die sichere Erzeugung des benötigten kryptografischen Materials noch nicht vollständig umgesetzt oder getestet sein. Die sichere Übertragung des kryptografischen Materials vom Erzeugungsserver, dem sogenannten Kryptomaterial-Server, zum Systemhersteller, beispielsweise einem Zulieferer, ist gegebenenfalls noch nicht sichergestellt. Das sichere Einbringen des Kryptomaterials in die Systemkomponente ist noch nicht oder noch nicht endgültig umgesetzt. Das sichere Speichern des kryptografischen Materials in dieser Systemkomponente ist eventuell noch nicht umgesetzt, weil beispielsweise das Zielsystem noch kein Hardwaresicherheitsmodul (Hardware Security Module; HSM) verbaut hat, obwohl dies zu einem späteren Zeitpunkt noch eingebaut werden soll. Die sichere Nutzung des kryptografischen Materials in dem System ist ggf. noch nicht umgesetzt, beispielsweise, weil zum Testen und Debuggen benötigte Entwicklungsschnittstellen vorhanden sind, welche einen lesenden und schreibenden Zugriff auf das gesamte System haben und damit insbesondere auch einen Zugriff auf das installierte kryptografische Material während der Entwicklungsphase erlauben. Diese sind aber notwendigerweise während der Entwicklung vorhanden und meist auch für alle beteiligten Personen und/oder Firmen im Entwicklungsprozess offen zugänglich.

Dies führt also dazu, dass nicht sichergestellt werden kann, dass das während der Entwicklungsphase verwendete Kryptomaterial nicht manipuliert oder ausgelesen wird. Dabei ist es jedoch so, dass dieses Test-Kryptomaterial in seiner Struktur und Form identisch zu dem später genutzten Produktiv-Kryptomaterial ist. Es eignet sich somit auch für den Einsatz im späteren Betrieb, also in der Produktivphase der jeweiligen Systemkomponente. Deshalb ist es besonders wichtig, dass das relativ schlecht gesicherte und daher mit einer hohen Wahrscheinlichkeit korrumpierte Test-Kryptomaterial im Produktivsystem nicht missbräuchlich eingesetzt wird. Noch gravierender ist es, wenn Produktiv-Kryptomaterial auf eine Systemkomponente in der Entwicklungsphase gelangt. Dieses einen sehr hohen Schutzbedarf aufweisende Material kann dann ebenfalls manipuliert oder ganz oder teilweise ausgelesen werden. Es ist damit nicht mehr geheim und kann nicht verwendet werden. Falls der Fehler unbemerkt bleibt oder bewusst vertuscht wird, verliert die später in die Produktivphase wechselnde Systemkomponente ihre Absicherung.

In der Praxis ist es so, dass die Sicherheitsvorschriften und Richtlinien durch die in den Phasen mit den Systemkomponenten beschäftigten Personen umgesetzt werden. Deshalb sind Fehler, Versehen und auch bewusste Manipulationen nicht auszuschließen. Von daher besteht prinzipiell immer die Gefahr, dass Test-Kryptomaterial in einer bereits in die Produktivphase gewechselten Systemkomponente verblieb oder das Produktiv-Kryptomaterial auf einer Systemkomponente eingesetzt wird, die noch in der Entwicklungsphase ist. Jegliches bewusst oder versehentlich in der Entwicklungsphase genutztes Kryptomaterial ist, aufgrund der vielen noch offenen Schnittstellen etc. mit hoher Wahrscheinlichkeit korrumpiert. Diese Gefahren führen letztlich zu einem erhöhten Sicherheitsrisiko. Dies stellt einen gravierenden Nachteil der bestehenden Vorgehensweise dar.

Ein Verfahren zur sicheren Nutzung von kryptografischem Material ist bereits aus der DE 10 2020 003 072 B3 bekannt. Dabei werden mehrere Systemkomponenten eines vernetzten Systems mit kryptografischem Material ausgestattet. Das kryptografische Material weist eine Markierung auf, welche das kryptografische Material als Entwicklungs- oder Produktivmaterial kennzeichnet. Die einzelnen Systemkomponenten weisen ein binäres Zustandsflag auf, welches angibt, ob sich die entsprechende Systemkomponente in ihrer Lebenszyklusphase in der Entwicklungs- oder in der Produktivphase befindet. Es erfolgt dann ein Vergleich der Markierung des kryptografischen Materials mit dem binären Zustandsflag der jeweiligen Systemkomponente. Stimmen die Markierung und das Flag überein, sprich ist das kryptografische Material beispielsweise als Entwicklungsmaterial markiert und befindet sich die Systemkomponente in der Entwicklungsphase, so wird das entsprechende kryptografische Material von der Systemkomponente verwendet. Stimmen hingegen die Markierung und das binäre Zustandsflag nicht überein, so werden Sicherungsmaßnahmen eingeleitet. Die Überprüfung der Übereinstimmung zwischen der Markierung des kryptografischen Materials und dem binären Zustandsflag erfolgt vor dem jeweiligen Gebrauch des kryptografischen Materials oder einmalig für das gesamte kryptografische Material in der Systemkomponente. Die Überprüfung der Übereinstimmung kann beispielsweise beim Hochfahren der Systemkomponente oder auch beim Bereitstellen des kryptografischen Materials erfolgen. Als Sicherungsmaßnahme kann eine Warnmeldung ausgegeben werden, die Bereitstellung des kryptografischen Materials abgebrochen oder verhindert werden und/oder nach Bedarf bereits in eine Systemkomponente eingebrachtes kryptografisches Material gelöscht werden.

Nachteilig ist dabei jedoch, dass zur Unterscheidung, ob kryptografisches Material auf der Systemkomponente eingesetzt werden darf, lediglich zwischen zwei Lebenszyklusphasen der entsprechenden Systemkomponente und zwei verschiedenen Eigenschaften (Test oder Produktiv) für das kryptografische Material unterschieden wird. Im realen Einsatz wird eine Unterscheidung in lediglich zwei Gruppen nicht ausreichen, da die Bedingungen für die sichere Nutzung von kryptografischem Material für verschiedene kryptografische Materiale und Systemkomponenten zu unterschiedlich sind. Wird beispielsweise ein Geheimnis direkt in einem Hardwaresicherheitsmodul erzeugt und aufbewahrt und verlässt dieses nie, so kann das kryptografische Material gegebenenfalls schon während der Entwicklungsphase sicher genutzt werden. Voraussetzung ist dabei jedoch, dass das Hardwaresicherheitsmodul in der Entwicklungsphase keine speziellen Diagnoseschnittstellen, welche das Auslesen des Geheimnisses ermöglichen würden, aufweist bzw. verwendet. Ein in Software inkludiertes Geheimnis hingegen ist Teil eines Programmcodes und kann so über diverse Schnittstellen vergleichsweise einfach ausgelesen beziehungsweise rekonstruiert werden. Ein sicherer Einsatz eines solchen Geheimnisses in einer späteren Produktivphase der Systemkomponente ist dann nicht möglich.

Zudem offenbart die US 2021/075607 A1 eine Schlüsselverwaltungsvorrichtung und einen Prozessorchip zur Verschlüsselung und Entschlüsselung von Daten. Kryptografische Schlüssel werden dabei in einer Schlüsseldatenbank gespeichert. Mit Hilfe einer Nachschlagetabelle lassen sich bestimmte Schlüssel innerhalb der Schlüsseldatenbank anhand einer Schlüsselnummer finden. Einem Schlüssel lassen sich dabei innerhalb der Nachschlagetabelle Metadaten zuordnen. Mit Hilfe der Metadaten lassen sich Zustände von Randbedingungen beschreiben, bei denen ein jeweiliger Schlüssel verwendbar ist.

Der vorliegenden Erfindung liegt die Aufgabe zugrunde, ein verbessertes Verfahren zur Implementierung und Nutzung von kryptografischem Material in wenigstens einer Systemkomponente eines informationstechnischen Systems anzugeben, welches eine besonders flexible sichere Implementierung und Nutzung von sich auf vielfältige Art und Weise unterscheidenden kryptografischen Materialen in verschiedenen Systemkomponenten erlaubt, und dabei gewährleistet, dass bei einer Systemkomponente, die selbst oder bei der wenigstens ein Untermodul in einem unsicheren Modus betrieben wird, für einen unsicheren Betrieb geeignetes kryptografisches Material von der Systemkomponente oder zumindest dem Untermodul verwendet wird und bei einer Systemkomponente, die selbst oder bei der wenigstens ein Untermodul in einem sicheren Modus betrieben wird, für einen sicheren Betrieb geeignetes kryptografisches Material von der Systemkomponente oder zumindest dem Untermodul verwendet wird.

Erfindungsgemäß wird diese Aufgabe durch ein Verfahren zur Implementierung und Nutzung von kryptografischem Material in wenigstens einer Systemkomponente eines informationstechnischen Systems mit den Merkmalen des Anspruchs 1 gelöst. Vorteilhafte Ausgestaltungen und Weiterbildungen ergeben sich aus den hiervon abhängigen Ansprüchen.

Bei einem Verfahren zur Implementierung und Nutzung von kryptografischem Material in wenigstens einer Systemkomponente eines informationstechnischen Systems der eingangs genannten Art, weist das kryptografische Material Zusatzdaten auf, welche erfindungsgemäß von wenigstens einer Bedingung, wenigstens einer Rolle und/oder wenigstens einer Zielkomponentenidentität ausgebildet werden. Zudem umfasst das kryptografische Material wenigstens eine zielkomponentenspezifische Rolle.

Das erfindungsgemäße Verfahren erlaubt eine besonders flexible sichere Implementierung und Nutzung von kryptografischem Material in den unterschiedlichsten Systemkomponenten und/oder deren Untermodulen. So erfordern verschiedene Systemkomponenten wie ein Steuergerät, ein Cloud-Server, eine auf einem mobilen Endgerät ausgeführte Applikation, ein Fahrzeug oder ein externes Gerät zu verschiedenen Zeitpunkten die Verwendung verschiedenster kryptografischer Materiale, wie symmetrische oder asymmetrische Schlüssel, Zertifikate, Zufallszahlen, Hashwerte oder dergleichen. So kann eine bestimmte Ziel-Systemkomponente, welche kryptografisches Material verwenden soll, in verschiedenen Zuständen auch die Verwendung verschiedener kryptografischer Materiale erfordern. Der Zustand der jeweiligen Systemkomponente wird dabei mit Hilfe wenigstens einer Variablen beschrieben. Die entsprechende Systemkomponente kann eine Vielzahl unterschiedlicher Zustände annehmen, somit also auch mehr als zwei Zustände wie das Befinden in einer Entwicklungsphase oder einer Produktivphase eines Lebenszyklus aufweisen. Auch können sich einzelne Untermodule einer Systemkomponente in verschiedenen Lebenszyklusphasen bzw. Zuständen befinden. Beispielsweise kann sich eine Netzwerkschnittstelle in einem ersten, unsicheren Zustand, und ein Speicherelement der Systemkomponente in einem zweiten, sicheren Zustand befinden. Ein entsprechendes informationstechnisches System kann dabei vernetzt oder isoliert sein.

Kryptografisches Material wird typischerweise von einem dedizierten System, beispielsweise einem Kryptomaterial-Server, erzeugt und als Teil eines speziellen Datenpakets an ein Zielsystem, sprich eine Ziel-Systemkomponente, übertragen. Dabei wird erfindungsgemäß das kryptografische Material um Zusatzdaten ergänzt. Eine entsprechende Bedingung legt dabei fest, unter welchen Umständen das Verwenden des kryptografischen Materials von der Systemkomponente zulässig ist bzw. nicht zulässig ist. Die entsprechenden Bedingungen können vielfältigster Natur sein. Beispielsweise kann mit der Bedingung gefordert werden, dass sich die jeweilige Systemkomponente in einem bestimmten Abschnitt eines Produktlebenszyklus befindet, oder dass die Systemkomponente ein Hardwaresicherheitsmodul aufweist, und, dass sich dieses in einem sicheren Zustand befindet, sodass das Hardwaresicherheitsmodul auf sichere Weise kryptografisches Material aufnehmen und ablegen kann. Das kryptografische Material kann dabei auch mehrere Bedingungen umfassen. Hierdurch kann die Implementierung und Nutzung von kryptografischem Material bei verschiedenen Systemkomponenten in einer noch größeren Anzahl unterschiedlicher Einsatzszenarien gesteuert werden.

Für eine Systemkomponente vorgesehenes kryptografisches Material erfüllt dort eine bestimmte Rolle. Werden von der gleichen Systemkomponente mehrere kryptografische Materiale der gleichen Art verwendet, beispielsweise mehrere öffentliche 4096-Bit-RSA-Schlüssel, so kann die Systemkomponente selbst nicht unterscheiden, welche Rolle das neue kryptografische Material spielen soll, also beispielsweise wie und wo es in der Systemkomponente zu installieren und wie es zu verwenden ist. Diese, die Rolle des kryptografischen Materials betreffende Information, kann in Form der Rolle an das kryptografische Material angehängt werden. Die Rolle unterscheidet sich dabei von der Bedingung derart, dass die Rolle keine Bedingung an den aktuellen Zustand der Systemkomponente stellt.

Zur besonders effizienten Unterscheidung in welcher Systemkomponente kryptografisches Material verwendet werden darf, kann das kryptografische Material mit einer Zielkomponentenidentität ergänzt werden. Die Zielkomponentenidentität umfasst dabei eine eindeutige Kennzeichnung der Systemkomponenten, welche das entsprechende kryptografische Material verwenden dürfen. Wird das entsprechende kryptografische Material auf eine Systemkomponente aufgebracht, welche nicht in der Zielkomponentenidentität umfasst ist, so wird die Verwendung des kryptografischen Materials auf dieser Systemkomponente unterbunden. Hierdurch lässt sich besonders einfach und schnell Vorsehen, welche Systemkomponenten welches kryptografische Material verwenden dürfen und welche nicht.

Die Zielkomponentenidentität kann dabei sowohl auf eine gesamte Klasse von Systemen, Systemkomponenten und/oder deren Untermodule gerichtet sein, also beispielsweise auf die Klasse "Head-Unit", "Motorsteuergerät", "Flash-Speicher" oder dergleichen, sowie auf genau eine spezielle Systemkomponente, beispielsweise das Hardwaresicherheitsmodul mit der Seriennummer "GHNS-1934952".

Mit Hilfe der wenigstens einen Bedingung, wenigstens einen Rolle und/oder wenigstens einer Zielkomponentenidentität lässt sich somit sehr effizient und flexibel steuern, welches kryptografische Material in welchen Einsatzszenarien, sprich in welchen Zuständen von welcher Systemkomponente und/oder deren Untermodulen, verwendet werden darf und welches nicht.

Das kryptografische Material wird typischerweise als Kryptomaterial-(Daten)Paket ausgebildet und zwischen Systemen bzw. Systemkomponenten ausgetauscht bzw. dort eingebracht. Das Kryptomaterial-Paket umfasst dabei wenigstens das eigentliche kryptografische Material, also beispielsweise ein asymmetrisches Schlüsselpaar, und die jeweilige Bedingung, Rolle und/oder Zielkomponentenidentität in Form von an das kryptografische Material angehängter Zusatzdaten. Hierzu können die angehängten Daten beispielsweise mit dem kryptografischen Material konkateniert sein. Auch kann das Kryptomaterial-Paket weitere Daten umfassen. Der Einfachheit halber wird im vorliegenden Text nur vom kryptografischen Material gesprochen.

Wird ein und dasselbe kryptografische Material an verschiedene Systemkomponenten verschickt, so kann es auf den verschiedenen Systemkomponenten auch verschiedene Rollen erfüllen. So lassen sich in das kryptografische Material zielkomponentenspezifische Rollen einbringen, welche dem kryptografischen Material mitteilen, auf welcher Systemkomponente es wie genutzt werden soll. Hierdurch lässt sich noch umfangreicher und flexibler steuern, wie kryptografisches Material auf verschiedene Systemkomponenten implementiert und dort genutzt wird.

Entsprechend einer vorteilhaften Weiterbildung des erfindungsgemäßen Verfahrens, werden sämtliche Bedingungen von einem systemkomponentenexternen Ersteller definiert und von wenigstens einem in einer Umgebung der Systemkomponente ausgeführten Auswerter ausgewertet, wobei der Ersteller und der Auswerter gemeinsam festlegen, welche Variablen bei der Definition von Bedingungen durch den Ersteller verwendet werden sollen. Hierzu können der Ersteller und der Auswerter einen festen Satz möglicher Variablen nutzen und bedingungsabhängig passende Variablen auswählen. Der Ersteller wählt dabei für jede Bedingung passende Variablen aus. Ebenso wird die Anzahl und die Art der Bedingungen vom Ersteller bestimmt. Der für die jeweiligen Variablen verwendete Name und zulässige Wertebereich wird dann gemeinsam von Ersteller und Auswerter festgelegt, wobei der Auswerter bestimmt, welche Namen und Wertebereiche der Ersteller verwenden darf. Der Ersteller entscheidet allerdings selbst, welche Namen und Wertebereiche er dann letztendlich verwendet.

Bei dem Ersteller handelt es sich beispielsweise um den bereits erwähnten Kryptomaterial-Server. Der Auswerter kann von Hard- und Software ausgebildet sein oder auch von einem Menschen. Der Auswerter kann von der Systemkomponente umfasst sein oder aber auch extern zur Systemkomponente ausgeführt sein, jedoch in einer selben Umgebung wie die Systemkomponente vorgesehen sein. Dies ermöglicht es dem Auswerter, die der Systemkomponente zugrundeliegenden und den entsprechenden Zustand der Systemkomponente beschreibenden Variablen zu erfassen. Ein systemkomponentenexterner Auswerter ermöglicht das Überprüfen der mittels des kryptografischen Materials an die Systemkomponente gestellten Bedingung(en) bei einer noch nicht gebooteten Systemkomponente. So lässt sich beispielsweise ohne ein vorheriges Hochfahren der entsprechenden Systemkomponente in einem Speicher der Systemkomponente entsprechendes überprüftes kryptografisches Material abspeichern.

Der Auswerter ist insbesondere dazu in der Lage, zu jedem beliebigen Zeitpunkt zu überprüfen, ob eine etwaige Bedingung für die jeweilige Systemkomponente erfüllt ist oder nicht. Indem sich der Ersteller und der Auswerter auf einen gemeinsamen Satz relevanter Variablen einigen, kann sichergestellt werden, dass die zur Auswertung einer bestimmten Bedingung benötigten Variablen vom Auswerter auch tatsächlich erfasst werden können. Dies erhöht die Zuverlässigkeit in der Anwendung des erfindungsgemäßen Verfahrens.

Eine weitere vorteilhafte Ausgestaltung des Verfahrens sieht ferner vor, dass wenigstens eine Variable einen der folgenden Wertebereiche aufweist:

- BOOLEAN;
- INTEGER; oder
- STRING.

Dabei können alle Variablen denselben Wertebereich aufweisen, sprich vom Typ BOOLEAN, INTEGER oder STRING sein, oder aber es können auch einzelne Variablen verschiedene Wertebereiche aufweisen. Durch die Verwendung der unterschiedlichen Wertebereiche bzw. Typen lassen sich die unterschiedlichsten Variablen zur Definition und nachfolgenden Überprüfung von Bedingungen verwenden.

Entsprechend nimmt eine Variable vom Typ BOOLEAN den Wert TRUE oder FALSE an. Mit Hilfe der Wertebereiche INTEGER und STRING lassen sich Zustände noch detaillierter beziehungsweise vielschichtiger beschreiben. So kann ein bestimmter Zustand beispielsweise mit Hilfe von Zahlen und/oder auch Zeichenketten beschrieben werden.

Ein Wertebereich kann beispielsweise von 1 bis 10 reichen. Die zur Definition eines Zustands verwendeten Variablen können beispielsweise in Form eines Vektors vorliegen. Der Vektor kann beispielsweise eine erste Variable vom Typ BOOLEAN und eine zweite Variable vom Typ INTEGER umfassen. Dieser Variablenvektor ist zeitabhängig. Zu einem bestimmten Zeitpunkt kann beispielsweise die erste Variable den Wert TRUE annehmen und die zweite Variable den Wert 24 aufweisen. Damit kann eine Bedingung für jede Systemkomponente durch den Auswerter, dessen Umgebung sich zu einem bestimmten Zeitpunkt t in einem eindeutigen durch die aktuellen Werte der Variablen beschriebenen Zustand befindet, ausgewertet werden, also darauf überprüft werden, ob die Variablen zu dem Zeitpunkt t die definierten Bedingungen erfüllen oder nicht. Der entsprechende Variablenvektor kann dabei auch wenigstens ein leeres Element umfassen. Dies ist beispielsweise der Fall, wenn der Auswerter eine bestimmte Variable nicht erfassen kann. Anstelle eines leeren Elements kann auch ein Platzhalter verwendet werden, wie beispielsweise die Zahl "0", "9999" oder eine Zeichenkette wie "NAN".

Ebenso können Variablen von einem strukturierten Typ sein, beispielsweise können Variablen ein:

- ARRAY oder ein
- RECORD sein,

wobei strukturierte Typen sowohl aus unstrukturierten als auch aus strukturierten Typen gebildet werden können.

Entsprechend einer weiteren vorteilhaften Ausgestaltung des Verfahrens ist wenigstens eine Bedingung zielkomponentenspezifisch und/oder operationsspezifisch definiert. So kann das kryptografische Material zur Durchführung verschiedener Operationen wie das Installieren von Software, Ver- oder Entschlüssen von bestimmten Daten, Erstellen oder Prüfen einer Signatur oder dergleichen verwendet und/oder von verschiedenen Systemkomponenten verwendet werden. Damit der Ersteller eine Bedingung als operationsspezifisch, also nur für eine bestimmte Operation geltend, kennzeichnen kann, muss, analog zur Menge der nutzbaren Zustandsvariablen, eine Menge von innerhalb der Systemkomponente bekannten Operationen dem Ersteller mitgeteilt werden, damit dieser diese bei der Definition von Bedingungen nutzen kann. Diese Menge von Operationen kann dabei allgemein, also für alle Zielkomponenten gültig, oder zielkomponentenspezifisch sein.

Damit eine bestimmte Bedingung auf unterschiedlichen Systemkomponenten und/oder bei der Durchführung unterschiedlicher Operationen als erfüllt gilt, kann es der Fall sein, dass für wenigstens zwei verschiedene Systemkomponenten und/oder Operationen eine bestimmte Variable einen unterschiedlichen Wert, also einmal TRUE und einmal FALSE, oder einmal 0 und einmal 256 annehmen muss.

Eine weitere vorteilhafte Ausgestaltung des erfindungsgemäßen Verfahrens sieht ferner vor, dass für eine zielkomponentenspezifische und/oder operationsspezifische Bedingung auf einer unterschiedlichen Ziel-Systemkomponente und/oder bei einer unterschiedlichen Operation wenigstens eine unterschiedliche Variable verwendet wird. So kann nicht nur eine bestimmte Variable zur Erfüllung einer Bedingung auf unterschiedlichen Systemkomponenten und/oder zur Durchführung unterschiedlicher Operationen verschiedene Werte annehmen, sondern es können hierzu auch unterschiedliche Variablen erforderlich sein. Insbesondere kann sich dabei die Menge und/oder Typ sowie eine Größe eines zulässigen Wertebereichs der für eine Bedingung relevanten Variablen zwischen unterschiedlichen Systemkomponenten und/oder Operationen unterscheiden. Beispielsweise müssen zur Erfüllung einer Bedingung auf einer ersten Systemkomponente die Variablen 1 und 2 die Werte 0 und TRUE annehmen und auf einer zweiten Systemkomponente die Variablen 1, 2 und 3 die Werte 0, TRUE und FALSE annehmen. Auf einer dritten Systemkomponente müssen zur Erfüllung der selben Bedingung hingegen die Variablen 1, 2, 3, 4, 5 und 6 die Werte TRUE, [0..100], [-100..100], 0, "engaged" und FALSE annehmen. Es können generell auch wenigstens zwei BOOLEAN-wertige Ausdrücke ODER verknüpft sein, worauf im Folgenden noch eingegangen wird.

Entsprechend einer weiteren vorteilhaften Ausgestaltung des Verfahrens überprüft ein Auswerter eine Bedingung mittels einer Auswertfunktion, wobei wenigstens zwei zueinander abweichende Auswerter eine zueinander abweichende Auswertfunktion nutzen, insbesondere eine operationsspezifische Auswertfunktion. Generell ist es möglich, dass sämtliche Auswerter dieselbe Auswertfunktion nutzen. Durch das Vorsehen verschiedener Auswertfunktionen wird jedoch eine Flexibilität in der Durchführung des erfindungsgemäßen Verfahrens zur Steuerung, unter welchen Bedingungen kryptografisches Material von Systemkomponenten eingesetzt wird, erhöht.

So kann generell auch eine generische Auswertfunktion verwendet werden, wodurch sämtliches kryptografische Material, beziehungsweise die vom kryptografischen Material umfassten Bedingungen, durch das Vorsehen lediglich einer Funktion ausgewertet werden kann. Die Auswertfunktion kann jedoch auch spezifisch für verschiedene kryptografische Materiale, beispielsweise je nach Rolle des kryptografischen Materials, ausgeführt sein. Insbesondere wird dabei noch einmal für verschiedene Auswertfunktionen für verschiedene Operationen unterschieden.

Eine weitere vorteilhafte Ausgestaltung des erfindungsgemäßen Verfahrens sieht ferner vor, dass wenigstens eine Bedingung in einer maschinell verarbeitbaren Definitionssprache definiert ist, wobei eine durch einen Interpreter interpretierbare ausführbare Sprache oder eine der folgenden formalen Logiken verwendet wird:

- Aussagenlogik;
- Aussagenlogik mit Relationen; oder
- Aussagenlogik mit Relationen und Funktionen.

Die Definition der Bedingung in einer maschinell verarbeitbaren Definitionssprache ermöglicht die Verwendung bestehender Sprachen zur Durchführung des erfindungsgemäßen Verfahrens. Unter Verwendung einer auswertbaren Definitionssprache lassen sich Bedingungen über den geltenden, einen Zustand der Systemkomponente beschreibenden Variablen, beispielsweise als mittels der Definitionssprache definierte und verarbeitbare BOOLEAN-wertige Ausdrücke, formulieren. Weist das kryptografische Material mehrere Bedingungen auf, so kann ein für die entsprechende Bedingung relevanter Variablensatz auch unterschiedliche Variablen enthalten. Dabei können alle Variablen eines entsprechenden Variablensatzes vom gleichen Typ sein, sprich BOOLEAN, INTEGER oder STRING, oder sich auch wenigstens zwei Variablen eines für eine jeweilige Bedingung relevanten Variablensatzes in ihrem Typ unterscheiden. Auch können für verschiedene vom kryptografischen Material umfasste Bedingungen dieselben oder verschiedene maschinell verarbeitbare Definitionssprachen gemischt verwendet werden.

Bei der bekannten Aussagenlogik haben alle für eine bestimmte Bedingung relevanten Variablen den Wertebereich BOOLEAN. Die einzelnen Variablen können also nur die Werte TRUE oder FALSE annehmen. Logische Formeln werden mit Hilfe von bekannten aussagenlogischen Junktoren, sprich "$\wedge$", "$\vee$", "$\neg$" oder dergleichen, sowie Klammern "(" ")" gebildet. Beispiele von aussagenlogischen Formeln sind:

- Variable1;
- Variable2 $\wedge$ TRUE;
- (Variable1 $\wedge$ (Variable2 v Variable3)).

Bei Aussagenlogik mit Relationen können für eine bestimmte Bedingung relevante Variablen verschiedene Wertebereiche haben. Es existiert eine endliche Menge von Relationen, wobei jeder Relation eine feste Stelligkeit zugeordnet ist, sowie jeder Relation und der Stelle ein fester Wertebereich zugeordnet ist. Ein relationaler Term ergibt sich dann durch die Anwendung einer Relation auf eine der Stelligkeit entsprechende Anzahl von Konstanten und/oder Variablen mit den passenden Wertebereichen. Bei der Auswertung eines relationalen Terms für eine feste vorgegebene Wertebelegung der in diesem Term vorkommenden Variablen ergibt sich immer ein Boolescher Wert, also TRUE oder FALSE. Ein Beispiel für eine zweistellige Relation, die beispielsweise in beiden Stellen INTEGER als Wertebereich erfordert, ist die kleiner-gleich-Relation "$\leq$", auf dieser Relation basierende relationale Terme wären beispielsweise:

- Variable1 $\leq$ Variable2;
- 7 $\leq$ Variable3.

Logische Formeln werden mit Hilfe von BOOLEAN-Konstanten, BOOLEAN-Variablen, relationalen Termen und bekannten aussagenlogischen Junktoren $\wedge$, v, $\neg$, etc. sowie Klammern "(" und ")" zur Festlegung der Auswertungsreihenfolge gebildet. Ein Beispiel für eine aussagenlogische Formel mit Relationen, das die zweitstelligen Relationen "$\leq$" und "=" verwendet, ist:

-

$$(\text{Variable1} \wedge ((\text{Variable2} \leq \text{Variable3}) \vee (\text{Variable3} = \text{Variable4}))).$$

(Variable1 $\wedge$ ((Variable2 $\leq$ Variable3) v (Variable3 = Variable4))).

Bei Aussagenlogik mit Relationen und Funktionen wird zusätzlich eine endliche Menge von Funktionen verwendet, wobei jeder Funktion eine feste Stelligkeit zugeordnet ist, sowie jeder Funktion und jeder Stelle ein fester Wertebereich zugeordnet ist. Außerdem ist für jede Funktion der Wertebereich des Ergebnisses definiert. Eine Funktion wird dann auf eine der Stelligkeit entsprechende Anzahl von Konstanten, Variablen und/oder Funktionen mit den passenden Wertebereichen angewendet und liefert einen Wert aus dem vorgegebenen Ergebnis-Wertebereich. Ein Beispiel für eine zweistellige Funktion, die beispielsweise in beiden Stellen INTEGER als Wertebereich erfordert und einen INTEGER-Wert als Ergebnis liefert, ist die Addition "+". Logische Formeln werden wie bei der Aussagenlogik mit Relationen gebildet, mit dem Unterschied, dass relationale Terme nicht nur durch Anwendung von Relationen auf Konstanten und/oder Variablen, sondern auch auf Konstanten/Variablen angewendete Funktionen mit entsprechendem Ergebnis-Wertebereich gebildet werden können. Ein Beispiel für eine aussagenlogische Formel mit Relationen und Funktionen ist:

-

(Variable1 $\wedge$ ((Variable2 $\leq$ (Variable3 + Variable7)) v (((Variable3 - Variable8) + Variable2) = Variable4))).

Insbesondere die Verwendung einer durch einen Interpreter interpretierbaren ausführbaren Sprache hingegen bietet Vorteile. Solche Sprachen sind aufgrund der Ausführbarkeit sehr "mächtig". So ist vor Ausführung eines entsprechenden Programmcodes keine vorherige Übersetzung/Kompilierung, beziehungsweise Transformation in einen Formelbaum und Einsetzen von Variablenwerten, notwendig. Bei einer interpretierbaren ausführbaren Sprache kann es sich beispielsweise um eine Skriptsprache wie Python handeln.

Entsprechend einer weiteren vorteilhaften Ausgestaltung des erfindungsgemäßen Verfahrens werden wenigstens zwei Bedingungen in einer zueinander abweichenden Definitionssprache formuliert, insbesondere werden zwei zielkomponentenspezifische Bedingungen in einer zueinander abweichenden Definitionssprache formuliert. Verwendet eine erste Systemkomponente eine erste Sprache und eine zweite Systemkomponente eine zweite, zur ersten Sprache abweichende Sprache, so wird durch das Vorsehen zweier mit verschiedenen Definitionssprachen formulierter Bedingungen sichergestellt, dass beide Systemkomponenten die für sie relevante Bedingung auch auswerten können. Entsprechend sind auch die für die Bedingungen relevanten Variablen in der jeweiligen Definitionssprache formuliert. Es ist auch möglich, dass zwei für dieselbe Systemkomponente gültige Bedingungen in einer zueinander abweichenden Definitionssprache formuliert werden. So kann es vorteilhaft sein, eine bestimmte Bedingung mit einer bestimmten Definitionssprache zu formulieren. Dies ist beispielsweise der Fall, wenn das Erfassen und/oder Verarbeiten bestimmter Variablen nur mit einer bestimmten Definitionssprache möglich ist bzw. dies aufgrund verschiedenster Randbedingungen vorgegeben ist.

Eine weitere vorteilhafte Ausgestaltung des erfindungsgemäßen Verfahrens sieht ferner vor, dass das kryptografische Material wenigstens zwei Bedingungen umfasst und sämtliche Bedingungen erfüllt sein müssen, damit das kryptografische Material von der Systemkomponente verwendet wird. Rückbezogen auf die Verwendung formaler Logiken bedeutet dies, dass die verwendeten Bedingungen UND-verknüpft sind. So müssen alle Bedingungen erfüllt sein, damit das kryptografische Material von der Systemkomponente verwendet wird. So ist das Erfüllen einer einzelnen Bedingung zur Anwendung des kryptografischen Materials von der Systemkomponente notwendig, aber nicht notwendigerweise hinreichend, da wenigstens eine weitere Bedingung erfüllt werden muss.

Entsprechend einer weiteren vorteilhaften Ausgestaltung des Verfahrens liefert der Auswerter, wenn von einer Systemkomponente kryptografisches Material verwendet werden soll, dessen zielkomponentenspezifische Bedingung die Klasse der entsprechende Systemkomponente nicht umfasst, wenn durch Nutzung des kryptografischen Materials eine Operation durchzuführen ist, welche nicht von einer operationsspezifischen Bedingung umfasst ist oder wenn ein Auswerter eine zur Überprüfung eines Zustands erforderliche Variable nicht erfassen kann, für die jeweilige Bedingung standardmäßig die folgende Antwort:

- TRUE;
- FALSE; oder
- eine als Standardantwort an das kryptografische Material angehängte Antwort.

Hierdurch wird eine noch zuverlässigere Umsetzung des erfindungsgemäßen Verfahrens gewährleistet. So kann generell eine Systemkomponente, beziehungsweise eine Klasse der Systemkomponente, von der bestimmte kryptografische Materiale verwendet werden sollen, nicht in eine zielkomponentenspezifische Bedingung inkludiert sein. Damit trotzdem von der entsprechenden Systemkomponente das kryptografische Material angewendet werden kann, wird standardmäßig nach der Überprüfung der zielkomponentenspezifischen Bedingung der Wert TRUE ausgegeben. Soll stattdessen in einem solchen Fall die Anwendung des kryptografischen Materials unterbunden werden, wird standardmäßig der Wert FALSE ausgegeben. Zur Erhöhung der Flexibilität des erfindungsgemäßen Verfahrens kann auch die Standardantwort in Form von TRUE oder FALSE an das kryptografische Material angehängt werden. Hierdurch lässt sich das Risiko senken, dass auf einer Systemkomponente, deren Standardantwort auf TRUE gesetzt ist, das kryptografische Material angewendet wird, obwohl dies eigentlich nicht der Fall sein sollte. So wird in diesem Falle die Standardantwort in Form von FALSE an das kryptografische Material angehängt.

Die im vorigen getätigten Formulierungen gelten entsprechend für eine operationsspezifische Bedingung, sowie für den Fall, dass ein Auswerter eine zur Überprüfung einer bestimmten Bedingung erforderliche Variable nicht erfassen kann.

Eine weitere vorteilhafte Ausgestaltung des erfindungsgemäßen Verfahrens sieht ferner vor, dass sämtliche vom kryptografischen Material umfassten Zusatzdaten kryptografisch gegen eine Kompromittierung abgesichert werden, insbesondere unter Verwendung wenigstens einer digitalen Signatur und/oder eines symmetrischen Integritätsschutzmechanismus. Als symmetrischer Integritätsschutzmechanismus kann insbesondere ein Keyed-Hash Message Authentication Code (HMAC) verwendet werden. Das Absichern des kryptografischen Materials gegen Kompromittierung erhöht den Schutz bei der Durchführung des erfindungsgemäßen Verfahrens noch weiter. So werden die neben dem kryptografischen Material an das Kryptomaterial-Paket angehängten Zusatzdaten gegen unbefugte Manipulation geschützt. Beispielsweise kann das kryptografische Material samt den dazugehörigen Zusatzdaten beispielsweise vom Ersteller mit Hilfe seines asymmetrischen privaten Schlüssels digital signiert werden. Insbesondere werden zum Signieren sichere Verfahren und sichere Systeme genutzt. Der öffentliche Schlüssel oder ein den öffentlichen Schlüssel enthaltendes Zertifikat wird dann an alle betroffenen Auswerter verteilt. In den entsprechenden Systemen wird der entsprechende öffentliche Schlüssel bzw. das Zertifikat manipulationsgeschützt eingebracht. Beispielsweise wird der öffentliche Schlüssel bzw. das Zertifikat in einem schreibgeschützten Speicher (ROM) oder in einem nur einmalig beschreibbaren Speicher (WORM) abgespeichert. Entsprechend umfasst das Kryptomaterial-Paket eine solche digitale Signatur. Dementsprechend wird das kryptografische Material von der Systemkomponente nur dann verwendet, wenn eine Prüfung der an das kryptografische Material angehängten Signatur mit Hilfe des eingebrachten öffentlichen Schlüssels bzw. des Zertifikats ein positives Ergebnis liefert.

Entsprechend einer weiteren vorteilhaften Ausgestaltung des erfindungsgemäßen Verfahrens erhalten wenigstens zwei unterschiedliche Akteure eine Berechtigung zum digitalen Signieren des kryptografischen Materials, wobei sämtliche zum Signieren berechtigte Akteure ihr eigenes zu einer gemeinsamen Zertifikatshierarchie gehörendes Blattzertifikat mit dem dazugehörigen privaten Schlüssel erhalten. So ist es insbesondere dann sinnvoll, mehreren Akteuren eine Berechtigung zum digitalen Signieren zu geben, wenn auch mehrere Akteure kryptografisches Material erstellen. Ein die Signatur durchführendes System signiert dann das entsprechende kryptografische Material mit dem zu seinem Blattzertifikat gehörendem privaten Schlüssel. Dem kryptografischen Material wird dann nicht nur die erzeugte Signatur, sondern auch die gesamte Zertifikatskette hinzugefügt. Die an das kryptografische Material angehängte Zertifikatskette wird dann von einem entsprechenden Auswerter bzw. einem den Auswerter umfassenden System genutzt, um die Korrektheit der vom signierenden System erstellen Signatur zu prüfen.

Handelt es sich bei dem kryptografischen Material bereits um ein digitales Zertifikat, so ist es von vorneherein signiert. Werden dann Zusatzdaten, sprich wenigstens eine Bedingung, Rolle und/oder Zielkomponentenidentität, in das Zertifikat aufgenommen, so werden diese vom Ersteller des Zertifikats mitsigniert. So lassen sich die Zusatzdaten, oder auch nur Teile davon, als eine oder mehrere Zertifikatserweiterungen in das entsprechende Zertifikat mit aufnehmen und somit mitsignieren. Werden alle Zusatzdaten in das Zertifikat mit aufgenommen, so kann auf die dedizierte Erstellung der digitalen Signatur des kryptografischen Materials verzichtet werden.

Zur Gewährung eines bestmöglichen Schutzes sollte das erfindungsgemäße Verfahren frühestmöglich bei der Entwicklung einer entsprechenden Systemkomponente verwendet werden. Da die Überprüfung der Bedingung durch den Auswerter von Variablen abhängig ist, sind diese Variablen bestmöglich vor einer Manipulation zu schützen, da korrumpierte Variablen das Vorliegen eines tatsächlich nicht existierenden Zustands vortäuschen können. Zur Bewertung einer Bedingung verwendete Konstanten werden dementsprechend bevorzugt in einem einmalig beschreibbaren Speicher wie einem WORM-Speicher abgelegt. Die Werte der Variablen, von denen die Bedingungen abhängen, werden bevorzugt während des gesamten Lebenszyklus des informationstechnischen Systems bzw. der einzelnen Systemkomponenten auf systematische Weise an den aktuellen Systemzustand angepasst.

Bevorzugt wird als informationstechnisches System ein Fahrzeug-Ökosystem genutzt. Generell kann das erfindungsgemäße Verfahren für verschiedene Systemkomponenten in verschiedenartigen vernetzten oder nicht-vernetzten informationstechnischen Systemen eingesetzt werden. Besonders effizient ist eine Nutzung dann, wenn das informationstechnische System ein Fahrzeug-Ökosystem ist, da hier die entsprechenden Anforderungen hinsichtlich einer aufwändigen Entwicklung mit vielen beteiligten Partnern das Einhalten von Sicherheitsrichtlinien in der Praxis häufig sehr schwierig macht. Durch die Implementierung des erfindungsgemäßen Verfahrens und damit einer Selbstüberprüfung durch die jeweilige Systemkomponente kann die Gefahr einer potenziellen Sicherheitslücke drastisch minimiert werden.

Weitere vorteilhafte Ausgestaltungen des erfindungsgemäßen Verfahrens zur Implementierung und Nutzung von kryptografischem Material in wenigstens einer Systemkomponente eines informationstechnischen Systems ergeben sich auch aus den Ausführungsbeispielen, welche nachfolgend unter Bezugnahme auf die Figuren näher beschrieben werden.

Dabei zeigen:

Fig. 1    eine Prinzipdarstellung einer ersten Verwendung von kryptografischem Material auf einer Systemkomponente eines informationstechnischen Systems;

Fig. 2    eine Prinzipdarstellung einer Verwendung alternativen kryptografischen Materials auf der in Figur 1 gezeigten Systemkomponente;

Fig. 3    eine Prinzipdarstellung einer Verwendung alternativen kryptografischen Materials auf einer weiteren Systemkomponente; und

Fig. 4    ein Ablaufdiagramm einer beispielhaften Verarbeitung von kryptografischem Material auf einer Systemkomponente bei der Ausführung einer Operation.

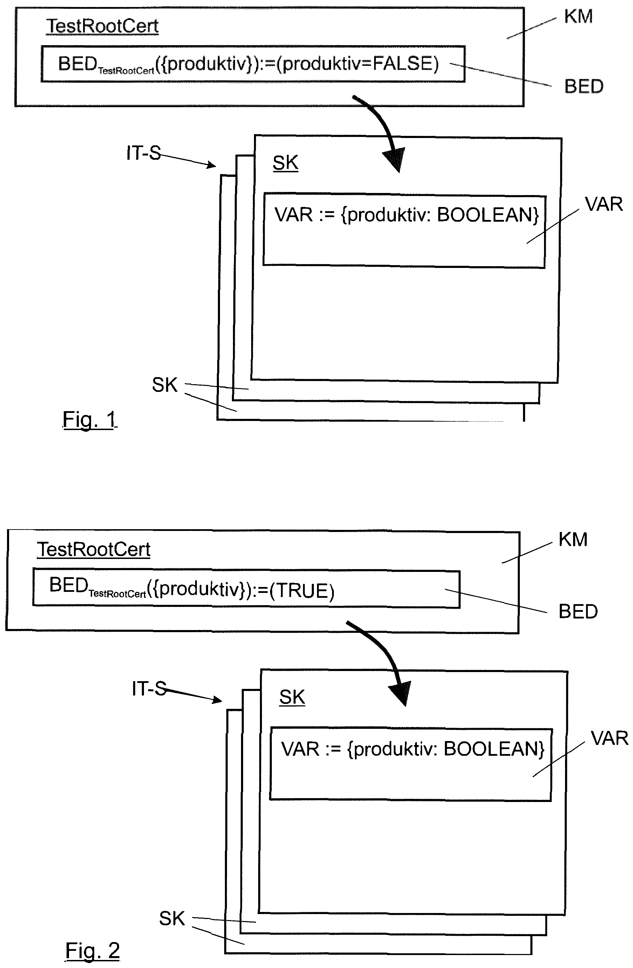

Figur 1 zeigt ein erstes Ausführungsbeispiel zur Verwendung von kryptografischem Material KM von wenigstens einer Systemkomponente SK eines informationstechnischen Systems IT-S. Ein Zustand der Systemkomponente SK wird mittels wenigstens einer Variable VAR beschrieben. In dem Beispiel in Figur 1 wird die Menge aller Variablen VAR als VAR bezeichnet und die einzelne hier verwendete Zustandsvariable als "produktiv". Die Zustandsvariable *produktiv* zeigt an, ob sich die Systemkomponente SK in einer Produktivphase ihres Lebenszyklus befindet, also ein Produktivsystem ist, oder nicht. Bei dem kryptografischen Material KM handelt es sich um ein selbstsigniertes, zu einem Test-Root-Schlüsselpaar (TestRootPub, TestRootPriv) gehörendes Test-Root-Zertifikat TestRootCert, das ins Zielsystem als Vertrauensanker eingebracht wird, um damit Test-Verbindungen mit Kommunikationspartnern aufbauen zu können, indem die Vertrauenswürdigkeit der von Partnern empfangenen mit TestRootPriv signierten Zertifikate mit Hilfe von TestRootCert überprüft werden kann.

Das Zertifikat TestRootCert ist unter unsicheren Bedingungen erstellt worden, beispielsweise ist der private Schlüssel TestRootPriv nicht sicher abgelegt. Somit darf TestRootCert in Produktivsystemen nicht verwendet werden. Dementsprechend ist eine vom kryptografischen Material KM umfasste Bedingung BED als *produktiv* = FALSE definiert. Die Bedingung BED besagt, dass das Zertifikat TestRootCert vom Zielsystem, sprich der Systemkomponente SK, nur verwendet werden darf, wenn es sich nicht in der Produktivphase befindet.

Figur 2 zeigt ein ähnliches Ausführungsbeispiel, bei dem das kryptografische Material KM nun ein sicher erzeugtes, in Produktivsystemen sicher einsatzbares Zertifikat ProdRootCert umfasst. Entsprechend darf das Zertifikat ProdRootCert vom Zielsystem, sprich der Systemkomponente SK, immer, beispielsweise auch in der Entwicklungs- und in der Produktivphase, verwendet werden. ProdRootCert darf auch in der Entwicklungsphase verwendet werden, weil es keine geheimen Anteile enthält. Entsprechend ist die Bedingung BED auch nicht von der Zustandsvariable *produktiv* abhängig, sondern gilt immer als erfüllt (TRUE). Da die Bedingung BED von keiner Variablen VAR abhängt, könnte man auch eine leere Menge von Zustandsvariablen wählen, also $BED_{TestRootCert}(\{\}):=(TRUE)$ anstelle von $BED_{TestRootCert}(\{produktiv\}):=(TRUE)$.

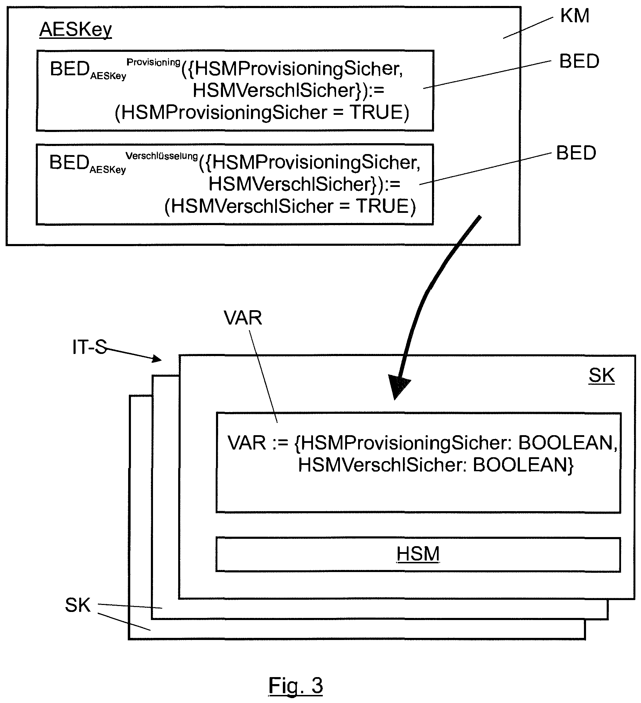

Figur 3 zeigt ein weiteres Ausführungsbeispiel der Implementierung und Nutzung von kryptografischem Material KM in einer Systemkomponente SK. Die Systemkomponente SK weist hier zwei Zustandsvariablen auf, nämlich die beiden Elemente HSMProvisioningSicher: BOOLEAN, und HSMVerschlSicher: BOOLEAN der Menge an Variablen VAR. Die Menge an Variablen VAR entspricht hier einem Vektor mit zwei Elementen. Die Zustandsvariable HSMProvisioning-Sicher zeigt an, ob ein Hardwaresicherheitsmodul HSM bereits in einem Zustand ist, in dem es auf sichere Weise kryptografisches Material KM aufnehmen und ablegen kann. Die Zustandsvariable HSMVerschlSicher zeigt an, ob das Hardwaresicherheitsmodul HSM bereits in einem Zustand ist, in dem es auf sichere Weise in ihm abgelegte geheime Schlüssel für Verschlüsselung nutzen kann. Bei dem kryptografischen Material KM handelt es in Figur 3 um einen 256-Bit langen, geheimen symmetrischen Schlüssel AESKey, der für AES-Verschlüsselung in Produktivsystemen genutzt werden soll.

Zwei Operationen sollen durch Bedingungen BED abgesichert werden. Dabei handelt es sich zum einen um das Bereitstellen kryptografischen Materials KM, sprich das sichere Einbringen und sichere Ablegen eines Schlüssels in die Systemkomponente SK. Ferner handelt es sich um Verschlüsselung, das heißt die sichere Nutzung eines Schlüssels für die Verschlüsselung in der Systemkomponente SK. Die sichere Verwendung des Schlüssels im Zielsystem wird durch zwei Bedingungen BED $BED_{AESKey}^{Provisioning}$ und $BED_{AESKey}^{Verschlüsselung}$ sichergestellt. Die Bedingung BED $BED_{AESKey}^{Provisioning}$ besagt, dass der Schlüssel AESKey nur in das Zielsystem eingebracht werden darf, wenn HSMProvisioningSicher = TRUE gilt. Die Bedingung BED $BED_{AESKey}^{Verschlüsselung}$ besagt, dass der Schlüssel AESKey im Zielsystem nur dann für die Verschlüsselung genutzt werden darf, wenn HSMVerschlSicher = TRUE gilt.

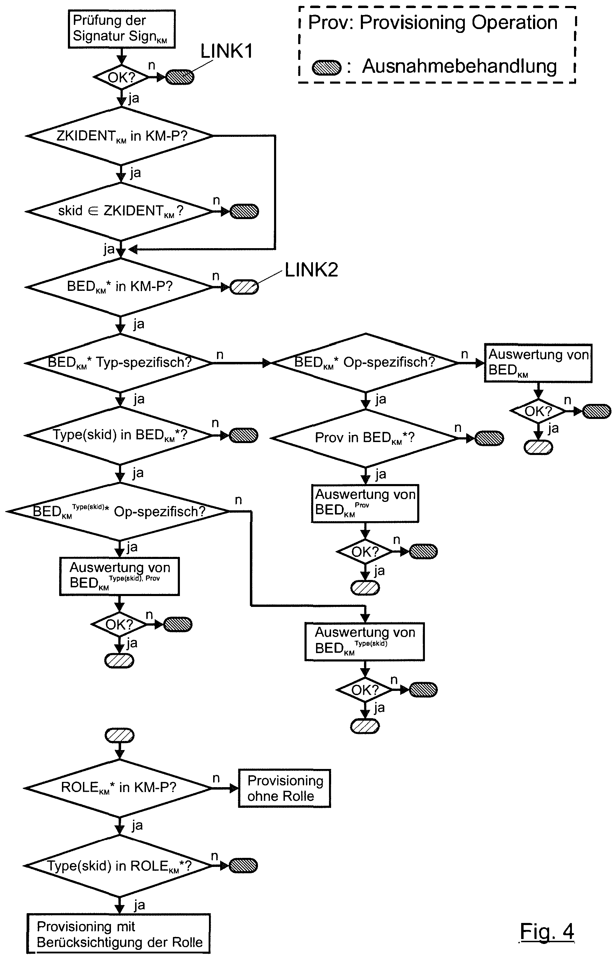

Figur 4 zeigt ein Ablaufdiagramm eines erfindungsgemäßen Verfahrens. Dabei wird angenommen, dass ein Kryptomaterial-Paket KM-P folgende Form aufweist: KM-P = (KM, $ZKIDENT_{KM}$, $BED_{KM}^*$, $ROLE_{KM}^*$, $Sign_{KM}$, ZK), wobei $ZKIDENT_{KM}$ die Gesamtheit der für das kryptografische Material KM erlaubten Zielkomponentenidentitäten $ZKIDENT_{KM}$, $BED_{KM}^*$ die Gesamtheit der dem kryptografischen Material KM zugeordneten, gegebenenfalls zielkomponentenspezifischen und/oder operationsspezifischen Bedingungen BED, und $ROLE_{KM}^*$ die Gesamtheit der gegebenenfalls zielkomponentenspezifischen Rollen $ROLE_{KM}^*$ bezeichnet. Dabei kann auch wenigstens eine der genannten Größen $ZKIDENT_{KM}$, $BED_{KM}^*$, $ROLE_{KM}^*$ im Kryptomaterial-Paket KM-P fehlen. $Sign_{KM}$ ist die vom Ersteller des kryptografischen Materials KM erstellte Signatur von (KM, $ZKIDENT_{KM}$, $BED_{KM}^*$, $ROLE_{KM}^*$) und ZK ist die Zertifikatskette, mit deren Hilfe die Systemkomponente SK die Korrektheit der Signatur $Sign_{KM}$ überprüfen kann. Zur eindeutigen Adressierung einer Systemkomponente SK wird des Weiteren angenommen, dass die Systemkomponente SK die Identität skid und den Zielsystemkomponenten-Typen Type(skid) aufweist. Beispielsweise können die Identität skid und der Zielsystemkomponenten Typ Type(skid) auf einer Systemkomponente SK in die Variablen VAR inkludiert sein. Ein Systemkomponententyp kann auch als Klasse von Systemkomponenten SK verstanden werden, also beispielsweise alle Systemkomponenten SK der Klasse/des Typs "Head-Unit", "Motorsteuergerät" oder dergleichen. Ferner wird angenommen, dass der Auswerter überprüfen will, ob das im Kryptomaterial-Paket KM-P enthaltene kryptografische Material KM in der Systemkomponente SK für eine Operation Prov in der Systemkomponente SK installiert werden darf. Bei der Operation kann es sich generell um eine beliebige Operation handeln, wie beispielsweise das Durchführen eines Entschlüsselungsvorgangs. In dem Beispiel in Figur 4 handelt es sich bei der Operation um das eigentliche Provisioning des kryptografischen Materials KM.

Zuerst erfolgt eine Prüfung der Signatur $Sign_{KM}$. Ist die Signaturprüfung nicht erfolgreich, so folgt gemäß einem ersten Link LINK1 eine Ausnahmebehandlung. Ist die Signaturprüfung hingegen erfolgreich, so wird überprüft, ob das kryptografische Material KM, hier in Form des Kryptomaterial-Pakets KM-P, wenigstens eine Zielkomponentenidentität ZKIDENT$_{KM}$ umfasst. Ist dies der Fall, so wird überprüft, ob die Identität skid der Systemkomponente SK von der Zielkomponentenidentität ZKIDENT$_{KM}$ umfasst ist, und falls nicht, gemäß des ersten Links LINK1 eine Ausnahmebehandlung eingeleitet. Ist dies hingegen nicht der Fall, umfasst das Kryptomaterial-Paket KM-P also keine Zielkomponentenidentität ZKIDENT$_{KM}$, wird dieser Schritt übersprungen.

Anschließend wird überprüft, ob und ggf. welche Bedingungen BED$_{KM}$* im kryptografischen Material KM enthalten sind. Umfasst das Kryptomaterial-Paket KM-P keine Bedingung BED$_{KM}$*, so wird gemäß eines zweiten Links LINK2, der eine Installation des kryptografischen Materials KM bedeuten könnte, fortgefahren.

Anschließend wird untersucht, ob wenigstens eine Bedingung BED$_{KM}$* zielkomponentenspezifisch ist.

Ist dies nicht der Fall, so wird überprüft, ob wenigstens eine Bedingung BED$_{KM}$* operationsspezifisch ist.

Ist dies nicht der Fall, so wird die entsprechende Bedingung BED$_{KM}$ ausgewertet und entsprechend des ersten oder zweiten Links LINK1, LINK2 fortgefahren.

Wird hingegen festgestellt, dass die wenigstens eine Bedingung BED$_{KM}$* operationsspezifisch ist, so erfolgt anschließend eine Prüfung, ob als Operation eine Bereitstellung des kryptografischen Materials KM vorgesehen ist, also ein Provisioning. Ist dies der Fall, so erfolgt eine Prüfung der operationsspezifischen Bedingung BED$_{KM}^{Prov}$. Anschließend wird analog der Links LINK1, LINK2 fortgefahren.

Wurde hingegen wenigstes eine typspezifische Bedingung im Kryptomaterial-Paket KM-P erkannt, so wird überprüft, ob wenigstens eine der typspezifischen Bedingungen auch für eine ganze Klasse an Systemkomponenten SK gültig ist, also ob Type(skid) in BED$_{KM}$* enthalten ist. Die Menge der für die jeweilige durch Type(skid) referenzierte Klassen gültigen Bedingungen wird im Folgenden als BED$_{KM}^{Type(skid)}$* bezeichnet. Ist dies der Fall, so darf ein Provisioning erfolgen (siehe erster Link LINK1). Ist dies nicht der Fall, muss überprüft werden, welches Standardverfahren angewendet werden soll. Also ob ein Provisioning erfolgen darf oder nicht. Hierzu kann beispielsweise eine Standardantwort in das Kryptomaterial-Paket KM-P inkludiert sein.

Anschließend wird überprüft, ob die typspezifische Bedingung BED$_{KM}^{Type(skid)}$* auch zusätzlich operationsspezifisch ist. Ist das nicht der Fall, wird die Bedingung BED$_{KM}^{Type(skid)}$ ausgewertet und gemäß der Links LINK1, LINK2 fortgefahren. Sind die Bedingungen BED$_{KM}^{Type(skid)}$* hingegen operationsspezifisch, wird überprüft, ob in BED$_{KM}^{Type(skid)}$* wenigstens eine operationsspezifische Bedingung, hier als stellvertretendes Beispiel für die Operation Prov ("Provisioning"), also eine Bedingung BED$_{KM}^{Type(skid), Prov}$, umfasst ist (dieser Schritt ist in Figur 4 nicht gezeigt). Ist dies nicht der Fall, wird gemäß des ersten Links LINK1 eine Ausnahmebehandlung eingeleitet. Ist dies hingegen der Fall, enthält BED$_{KM}^{Type(skid)}$* also eine Bedingung BED$_{KM}^{TyPe(skid), Prov}$, so wird diese ausgewertet und es wird analog der Links LINK1, LINK2 fortgefahren.

Nach Auswertung der einzelnen Bedingungen BED$_{KM}$, BED$_{KM}^{Prov}$, BED$_{KM}^{Type(skid)}$ oder BED$_{KM}^{Type(skid), Prov}$ wird geprüft, ob das kryptografische Material KM, hier in Form des Kryptomaterial-Pakets KM-P, wenigstens eine Rolle ROLE$_{KM}$* umfasst. Ist dies nicht der Fall, erfolgt eine Bereitstellung des kryptografischen Materials KM für die Systemkomponente SK ohne Rolle. Ist dies hingegen der Fall, so wird anschließend überprüft, ob ROLE$_{KM}$* eine Rolle für den Zielkomponenten-Typen Type(skid) umfasst. Ist dies nicht der Fall, erfolgt erneut eine Ausnahmebehandlung. Ist dies hingegen der Fall, erfolgt die Bereitstellung des kryptografischen Materials KM unter Berücksichtigung der Rolle ROLE$_{KM}$*.

**Patentansprüche**

**1.** Verfahren zur Implementierung und Nutzung von kryptografischem Material (KM) in wenigstens einer Systemkomponente (SK) eines informationstechnischen Systems (IT-S) zur Durchführung wenigstens einer Operation, wobei wenigstens zu einem ersten Zeitpunkt ein durch wenigstens eine Variable (VAR) beschriebener Zustand der Systemkomponente (SK) überprüft wird, das kryptografische Material (KM) um Zusatzdaten ergänzt wird, wobei die Zusatzdaten mögliche Zustände von Systemkomponenten (SK) beschreiben, und das kryptografische Material (KM) von der Systemkomponente (SK) verwendet wird, wenn die Zusatzdaten des kryptografischen Materials (KM) zumindest den Zustand umfassen, den die Systemkomponente (SK) zum ersten Zeitpunkt aufweist,
**dadurch gekennzeichnet, dass**
die Zusatzdaten von wenigstens einer Bedingung (BED, BED$_{KM}$*, BED$_{KM}^{Prov}$, BED$_{KM}^{Type(skid)}$, BED$_{KM}^{Type(skid), Prov}$), wenigstens einer Rolle (ROLE$_{KM}$*) und/oder wenigstens einer Zielkomponentenidentität (ZKIDENT$_{KM}$) ausgebildet werden; und das kryptografische Material (KM) wenigstens eine zielkomponentenspezifische Rolle (ROLE$_{KM}$*) umfasst.

**2.** Verfahren nach Anspruch 1,
**dadurch gekennzeichnet, dass**
sämtliche Bedingungen (BED, BED$_{KM}$*, BED$_{KM}^{Prov}$, BED$_{KM}^{Type(skid)}$, BED$_{KM}^{Type(skid), Prov}$) von einem zur Systemkomponente (SK) externen Ersteller definiert und von wenigstens einem in einer Umgebung der Systemkomponente (SK) ausgeführten Auswerter ausgewertet werden, wobei der Ersteller und der Auswerter gemeinsam festlegen, welche Variablen (VAR) vom Ersteller bei der Definition genutzt werden dürfen.

**3.** Verfahren nach einem der Ansprüche 1 oder 2,
**dadurch gekennzeichnet, dass**
wenigstens eine Variable (VAR) einen der folgenden Wertebereiche aufweist:

- BOOLEAN;
- INTEGER; oder
- STRING.

**4.** Verfahren nach einem der Ansprüche 1 bis 3,
**dadurch gekennzeichnet, dass**
wenigstens eine Bedingung ($BED_{KM}^{Prov}$, $BED_{KM}^{Type(skid)}$, $BED_{KM}^{Type(skid),\ Prov}$) zielkomponentenspezifisch und/oder operationsspezifisch definiert ist.

**5.** Verfahren nach Anspruch 4,
**dadurch gekennzeichnet, dass**
für eine zielkomponentenspezifische und/oder operationsspezifische Bedingung ($BED_{KM}^{Prov}$, $BED_{KM}^{Type(skid)}$, $BED_{KM}^{Type(skid),\ Prov}$) auf einer unterschiedlichen Zielkomponente und/oder bei einer unterschiedlichen Operation wenigstens eine unterschiedliche Variable (VAR) verwendet wird.

**6.** Verfahren nach einem der Ansprüche 2 bis 5,
**dadurch gekennzeichnet, dass**
ein Auswerter eine Bedingung ($BED$, $BED_{KM}^{*}$, $BED_{KM}^{Prov}$, $BED_{KM}^{Type(skid)}$, $BED_{KM}^{Type(skid),\ Prov}$) mittels einer Auswertfunktion überprüft, wobei wenigstens zwei zueinander abweichende Auswerter eine zueinander abweichende Auswertfunktion nutzen, insbesondere eine operationsspezifische Auswertfunktion.

**7.** Verfahren nach einem der Ansprüche 1 bis 6,
**dadurch gekennzeichnet, dass**
wenigstens eine Bedingung ($BED$, $BED_{KM}^{*}$, $BED_{KM}^{Prov}$, $BED_{KM}^{Type(skid)}$, $BED_{KM}^{Type(skid),\ Prov}$) in einer maschinell verarbeitbaren Definitionssprache definiert ist, wobei eine durch einen Interpreter interpretierbare ausführbare Sprache oder eine der folgenden formalen Logiken verwendet wird:

- Aussagenlogik;
- Aussagenlogik mit Relationen; oder
- Aussagenlogik mit Relationen und Funktionen.

**8.** Verfahren nach Anspruch 7,
**dadurch gekennzeichnet, dass**
wenigstens zwei Bedingungen ($BED$, $BED_{KM}^{*}$, $BED_{KM}^{Prov}$, $BED_{KM}^{Type(skid)}$, $BED_{KM}^{Type(skid),\ Prov}$) in einer zueinander abweichenden Definitionssprache formuliert werden, insbesondere zwei zielkomponentenspezifische Bedingungen ($BED_{KM}^{Type(skid)}$, $BED_{KM}^{Type(skid),\ Prov}$).

**9.** Verfahren nach einem der Ansprüche 7 oder 8,
**dadurch gekennzeichnet, dass**
das kryptografische Material (KM) wenigstens zwei Bedingungen ($BED$, $BED_{KM}^{*}$, $BED_{KM}^{Prov}$, $BED_{KM}^{Type(skid)}$, $BED_{KM}^{Type(skid),\ Prov}$) umfasst und sämtliche Bedingungen ($BED$, $BED_{KM}^{*}$, $BED_{KM}^{Prov}$, $BED_{KM}^{Type(skid)}$, $BED_{KM}^{Type(skid),\ Prov}$) erfüllt sein müssen, damit das kryptografische Material (KM) von der Systemkomponente (SK) verwendet wird.

**10.** Verfahren nach einem der Ansprüche 4 bis 9,
**dadurch gekennzeichnet, dass**
wenn auf einer Systemkomponente (SK) kryptografisches Material (KM) verwendet werden soll dessen zielkomponentenspezifische Bedingung ($BED_{KM}^{Type(skid)}$, $BED_{KM}^{Type(skid),\ Prov}$) die Klasse der entsprechende Systemkomponente (SK) nicht umfasst, wenn durch Nutzung des kryptografischen Materials (KM) eine Operation durchzuführen ist, welche nicht von einer operationsspezifischen Bedingung ($BED_{KM}^{Prov}$, $BED_{KM}^{Type(skid),\ Prov}$) umfasst ist oder wenn ein Auswerter eine zur Überprüfung eines Zustands erforderliche Variable (VAR) nicht erfassen kann, der Auswerter für die jeweilige Bedingung (BED, $BED_{KM}^*$, $BED_{KM}^{Prov}$, $BED_{KM}^{Type(skid)}$, $BED_{KM}^{Type(skid), Prov}$) standardmäßig die folgende Antwort liefert:

- TRUE;
- FALSE; oder
- eine als Standardantwort an das kryptografische Material (KM) angehängte Antwort.

**11.** Verfahren nach einem der Ansprüche 1 bis 10,
**dadurch gekennzeichnet, dass**
sämtliche vom kryptografischen Material (KM) umfassten Zusatzdaten kryptografisch gegen eine Kompromittierung abgesichert werden, insbesondere unter Verwendung wenigstens einer digitalen Signatur und/oder eines symmetrischen Integritätsschutzmechanismus.

**12.** Verfahren nach Anspruch 11,
**dadurch gekennzeichnet, dass**
wenigstens zwei unterschiedliche Akteure eine Berechtigung zum digitalen Signieren des kryptografischen Materials (KM) erhalten, wobei sämtliche zum Signieren berechtigte Akteure die jeweils ihnen zugeordneten individuellen privaten Schlüssel samt den dazugehörigen individuellen Blattzertifikaten und die dazugehörige Zertifikatskette erhalten.

**13.** Verfahren nach einem der Ansprüche 1 bis 12,
**dadurch gekennzeichnet, dass**
als informationstechnisches System (IT-S) ein Fahrzeug-Ökosystem genutzt wird.

**Claims**

**1.** Method for the implementation and use of cryptographic material (KM) in at least one system component (SK) of an information technology system (IT-S) for carrying out at least one operation, wherein a state of the system component (SK) described by at least one variable (VAR) is checked at least at a first point in time, the cryptographic material (KM) is supplemented with additional data, the additional data describing possible states of system components (SK), and the cryptographic material (KM) is used by the system component (SK) if the additional data of the cryptographic material (KM) comprise at least the state that the system component (SK) has at the first point in time,
**characterized in that**
the additional data are formed by at least one condition (BED, $BED_{KM}^*$, $BED_{KM}^{Prov}$, $BED_{KM}^{Type(skid)}$, $BED_{KM}^{Type(skid), Pov}$), at least one role ($ROLE_{KM}^*$) and/or at least one target component identity ($ZKIDENT_{KM}$), and the cryptographic material (KM) has at least one target component-specific role ($ROLE_{KM}^*$).

**2.** Method according to claim 1,
**characterized in that**
all conditions (BED, $BED_{KM}^*$, $BED_{KM}^{Prov}$, $BED_{KM}^{Type(skid)}$, $BED_{KM}^{Type(skid), Prov}$) are defined by a creator, which is external to the system component (SK), and evaluated by at least one evaluator, which is executed in an environment of the system component (SK), wherein the creator and the evaluator jointly determine which variables (VAR) may be used by the creator in the definition.

**3.** Method according to either of claims 1 or 2,
**characterized in that**
at least one variable (VAR) has one of the following value ranges:

- BOOLEAN;
- INTEGER; or
- STRING.

**4.** Method according to any of claims 1 to 3,
**characterized in that**
at least one condition ($BED_{KM}^{Prov}$, $BED_{KM}^{Type(skid)}$, $BED_{KM}^{Type(skid), Prov}$) is defined in a target component-specific and/or operation-specific manner.

**5.** Method according to claim 4,
**characterized in that**
for a target component-specific and/or operation-specific condition ($BED_{KM}^{Prav}$, $BED_{KM}^{Type(skid)}$, $BED_{KM}^{Type(skid), Prov}$), at least one different variable (VAR) is used on a different target component and/or in a different operation.

**6.** Method according to any of claims 2 to 5,
**characterized in that**
an evaluator checks a condition (BED, $BED_{KM}^{*}$, $BED_{KM}^{Prov}$, $BED_{KM}^{Type(skid)}$, $BED_{KM}^{Type(skid), Prov}$) by means of an evaluation function, wherein at least two differing evaluators use a differing evaluation function, in particular an operation-specific evaluation function.

**7.** Method according to any of claims 1 to 6,
**characterized in that**
at least one condition (BED, $BED_{KM}^{*}$, $BED_{KM}^{Prov}$, $BED_{KM}^{Type(skid)}$, $BED_{KM}^{Type(skid), Prov}$) is defined in a machine-processable definition language, wherein an executable language, which can be interpreted by an interpreter, or one of the following formal logics is used:

- propositional logic;
- propositional logic with relations; or
- propositional logic with relations and functions.

**8.** Method according to claim 7,
**characterized in that**
at least two conditions (BED, $BED_{KM}^{*}$, $BED_{KM}^{Prov}$, $BED_{KM}^{Type(skid)}$, $BED_{KM}^{Type(skid), Prov}$) are formulated in a differing definition language, in particular two target component-specific conditions ($BED_{KM}^{Type(skid)}$, $BED_{KM}^{Type(skid), Prov}$).

**9.** Method according to either of claims 7 or 8,
**characterized in that**
the cryptographic material (KM) comprises at least two conditions (BED, $BED_{KM}^{*}$, $BED_{KM}^{Prov}$, $BED_{KM}^{Type(skid)}$, $BED_{KM}^{Type(skid), Prov}$) and all conditions (BED, $BED_{KM}^{*}$, $BED_{KM}^{Prov}$, $BED_{KM}^{Type(skid)}$, $BED_{KM}^{Type(skid), Prov}$) must be fulfilled in order for the cryptographic material (KM) to be used by the system component (SK).

**10.** Method according to any of claims 4 to 9,
**characterized in that**
if cryptographic material (KM) is to be used on a system component (SK), the target component-specific condition ($BED_{KM}^{Type(skid)}$, $BED_{KM}^{Type(skid), Prov}$) of the cryptographic material not comprising the class of the corresponding system component (SK), if an operation is to be carried out by using the cryptographic material (KM), the operation not being subject to an operation-specific condition ($BED_{KM}^{Prov}$, $BED_{KM}^{Type(skid), Prov}$), or if an evaluator cannot detect a variable (VAR) required to check a condition, the evaluator provides the following response by default for each condition (BED, $BED_{KM}^{*}$, $BED_{KM}^{Prov}$, $BED_{KM}^{Type(skid)}$, $BED_{KM}^{Type(skid), Prov}$).

- TRUE;
- FALSE; or
- a response attached as a standard response to the cryptographic material (KM).

**11.** Method according to any of claims 1 to 10,
**characterized in that**
all additional data contained in the cryptographic material (KM) are cryptographically secured against compromise, in particular using at least one digital signature and/or a symmetric integrity protection mechanism.

**12.** Method according to claim 11,
**characterized in that**
at least two different participants are authorized to digitally sign the cryptographic material (KM), wherein all participants authorized to sign receive the individual private keys assigned to them together with the associated individual leaf certificates and the associated certificate chain.

**13.** Method according to any of claims 1 to 12,
**characterized in that**

a vehicle ecosystem is used as an information technology system (IT-S).

**Revendications**

1. Procédé destiné à l'implémentation et à l'utilisation de matériel cryptographique (KM) dans au moins un composant système (SK) d'un système de technologie de l'information (IT-S) pour la réalisation d'au moins une opération, dans lequel au moins à un premier moment, un état du composant système (SK) décrit par au moins une variable (VAR) est vérifié, le matériel cryptographique (KM) est complété par des données supplémentaires, dans lequel les données supplémentaires décrivent des états possibles de composants système (SK), et le matériel cryptographique (KM) est utilisé par le composant système (SK) lorsque les données supplémentaires du matériel cryptographique (KM) comprennent au moins l'état que présente le composant système (SK) au premier moment,
**caractérisé en ce que**
les données supplémentaires sont formées par au moins une condition (BED, $BED_{KM}$*, $BED_{KM}^{Prov}$, $BED_{KM}^{Type(skid)}$, $BED_{KM}^{Type(skid),\ Prov}$), au moins un rôle ($ROLE_{KM}$*) et/ou au moins une identité de composant cible ($ZKIDENT_{KM}$) ; et le matériel cryptographique (KM) comprend au moins un rôle ($ROLE_{KM}$*) spécifique au composant cible.

2. Procédé selon la revendication 1,
**caractérisé en ce que**
toutes les conditions (BED, $BED_{KM}$*, $BED_{KM}^{Prov}$, $BED_{KM}^{Type(skid)}$, $BED_{KM}^{Type(skid),\ Prov}$) sont définies par un créateur externe au composant système (SK) et évaluées par au moins un évaluateur exécuté dans un environnement du composant système (SK), dans lequel le créateur et l'évaluateur définissent ensemble quelles variables (VAR) peuvent être utilisées par le créateur lors de la définition.

3. Procédé selon l'une des revendications 1 ou 2,
**caractérisé en ce**
**qu'**au moins une variable (VAR) présente l'une des plages de valeurs suivantes :

   - BOOLEAN ;
   - INTEGER ; ou
   - STRING.

4. Procédé selon l'une des revendications 1 à 3,
**caractérisé en ce**
**qu'**au moins une condition ($BEDKM^{Prov}$, $BED_{KM}^{Type(skid)}$, $BED_{KM}^{Type(skid),\ Prov}$) est définie de manière spécifique au composant cible et/ou spécifique à l'opération.

5. Procédé selon la revendication 4,
**caractérisé en ce que**
pour une condition spécifique au composant cible et/ou spécifique à l'opération ($BED_{KM}^{Prov}$, $BED_{KM}^{Type(skid)}$, $BED_{KM}^{Type(skid),\ Prov}$) au moins une variable différente (VAR) est utilisée sur un composant cible différent et/ou pour une opération différente.

6. Procédé selon l'une des revendications 2 à 5,
**caractérisé en ce**
**qu'**un évaluateur vérifie une condition (BED, $BED_{KM}$*, $BED_{KM}^{Prov}$, $BED_{KM}^{Type(skid)}$, $BED_{KM}^{Type(skid),\ Prov}$) à l'aide d'une fonction d'évaluation, dans lequel au moins deux évaluateurs différents l'un de l'autre utilisent une fonction d'évaluation différente l'une de l'autre, en particulier une fonction d'évaluation spécifique à l'opération.

7. Procédé selon l'une des revendications 1 à 6,
**caractérisé en ce**
**qu'**au moins une condition (BED, $BED_{KM}$*, $BED_{KM}^{Prov}$, $BED_{KM}^{Type(skid)}$, $BED_{KM}^{Type(skid),\ Prov}$) est définie dans un langage de définition pouvant être traité par une machine, dans lequel un langage exécutable pouvant être interprété par un interpréteur ou l'une des logiques formelles suivantes est utilisé :

   - logique propositionnelle ;
   - logique propositionnelle avec relations ; ou
   - logique propositionnelle avec relations et fonctions.

**8.** Procédé selon la revendication 7,
**caractérisé en ce**
qu'au moins deux conditions (BED, $BED_{KM}*$, $BED_{KM}^{Prov}$, $BE_{DKM}^{Type(skid)}$, $BED_{KM}^{Type(skid), Prov}$) sont formulées dans un langage de définition différent l'une de l'autre, en particulier deux conditions spécifiques au composant cible ($BED_{KM}^{Type(skid)}$, $BED_{KM}^{Type(skid), Prov}$).

**9.** Procédé selon l'une des revendications 7 ou 8,
**caractérisé en ce que**
le matériel cryptographique (KM) comprend au moins deux conditions (BED, $BED_{KM}*$, $BED_{KM}^{Prov}$, $BED_{KM}^{Type(skid)}$, $BED_{KM}^{Type(skid), Prov}$) et toutes les conditions (BED, $BED_{KM}*$, $BED_{KM}^{Prov}$, $BED_{KM}^{Type(skid)}$, $BED_{KM}^{Type(skid), Prov}$) doivent être remplies pour que le matériel cryptographique (KM) soit utilisé par le composant système (SK).

**10.** Procédé selon l'une des revendications 4 à 9,
**caractérisé en ce que**
lorsque du matériel cryptographique (KM) doit être utilisé sur un composant système (SK), dont la condition spécifique au composant cible ($BED_{KM}^{Type(skid)}$, $BED_{KM}^{Type(skid), Prov}$) ne comprend pas la classe du composant système (SK) correspondant, si une opération doit être réalisée par l'utilisation du matériel cryptographique (KM), qui n'est pas comprise par une condition spécifique à l'opération ($BED_{KM}^{Prov}$, $BED_{KM}^{Type(skid), Prov}$) ou si un évaluateur ne peut pas saisir une variable (VAR) nécessaire à la vérification d'un état, l'évaluateur, pour la condition (BED, $BED_{KM}*$, $BED_{KM}^{Prov}$, $BED_{KM}^{Type(skid)}$, $BED_{KM}^{Type(skid), Prov}$) respective, fournit par défaut la réponse suivante :

- TRUE ;
- FALSE ; ou
- une réponse jointe en tant que réponse standard au matériel cryptographique (KM).

**11.** Procédé selon l'une des revendications 1 à 10,
**caractérisé en ce que**
toutes les données supplémentaires comprises par le matériel cryptographique (KM) sont protégées cryptographiquement contre une compromission, en particulier à l'aide d'au moins une signature numérique et/ou un mécanisme symétrique de protection de l'intégrité.

**12.** Procédé selon la revendication 11,
**caractérisé en ce**
qu'au moins deux acteurs différents reçoivent une autorisation pour la signature numérique du matériel cryptographique (KM), dans lequel tous les acteurs autorisés à signer reçoivent les clés privées individuelles qui leur sont respectivement attribuées, y compris les certificats de feuille individuels correspondants et la chaîne de certificats correspondante.

**13.** Procédé selon l'une des revendications 1 à 12,
**caractérisé en ce**
qu'un écosystème automobile est utilisé comme système de technologie de l'information (IT-S).

TestRootCert

$$BED_{TestRootCert}(\{produktiv\}):=(produktiv=FALSE)$$

KM

BED

IT-S

SK

VAR := {produktiv: BOOLEAN}

VAR

SK

Fig. 1

TestRootCert

$$BED_{TestRootCert}(\{produktiv\}):=(TRUE)$$

KM

BED

IT-S

SK

VAR := {produktiv: BOOLEAN}

VAR

SK

Fig. 2

**AESKey** — KM

$BED_{AESKey}^{Provisioning}(\{HSMProvisioningSicher, HSMVerschlSicher\}):= (HSMProvisioningSicher = TRUE)$ — BED

$BED_{AESKey}^{Verschlüsselung}(\{HSMProvisioningSicher, HSMVerschlSicher\}):= (HSMVerschlSicher = TRUE)$ — BED

VAR

IT-S

SK

VAR := {HSMProvisioningSicher: BOOLEAN, HSMVerschlSicher: BOOLEAN}

**HSM**

SK

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020003072 B3
- US 2021075607 A1